# EUROPÄISCHE PATENTANMELDUNG

(11) **EP 3 222 377 A1**
(43) Veröffentlichungstag der Anmeldung: **27.09.2017**
(21) Anmeldenummer: 16162010.9
(22) Anmeldetag: 23.03.2016
(51) Int. Cl.: B23B 51/02, B28D 1/14

(54) **BOHRER**

(71) Anmelder: HILTI Aktiengesellschaft, 9494 Schaan (LI)
(72) Erfinder: Hartmann, Markus, 87665 Mauerstetten (DE); Brunner, Michael, 86862 Lamerdingen (DE); Hammers, Thilo, 82269 Geltendorf (DE); Kaps, Helene, 81245 München (DE); Lindner, Norbert, 86916 Kaufering (DE)
(74) Vertreter: Hilti Aktiengesellschaft Corporate Intellectual Property

(57) **Zusammenfassung**

Ein Bohrer **1** hat in einer Schlagrichtung **9** aufeinanderfolgend auf einer Bohrerachse **6** eine Schlagfläche **5,** einen Förderabschnitt **3** und einen Bohrkopf **2.** Der Förderabschnitt **3; 26** ist zum Fördern von Bohrgut in Schlagrichtung **9** eingerichtet.

## Beschreibung

### GEBIET DER ERFINDUNG

Die vorliegende Erfindung betrifft einen Wendelverschluss für einen Bohrer und den Bohrer mit dem Wendelverschluss.

EP2886229A1 beschreibt einen Bohrer für den Abbau von mineralischen Baumaterialien, wie Beton. Der Bohrkopf und der Bohrer sind für einen raschen Abbau des mineralischen Gesteins optimiert. Der Bohrkopf kann ferner Armierungseisen zermahlen, welche häufig in Beton eingegossen sind. Allerdings ist der Bohrfortschritt beim Abbau des Armierungseisens um eine Größenordnung geringer als beim Abbau des Betons.

### OFFENBARUNG DER ERFINDUNG

Der erfindungsgemäße Bohrer hat in einer Schlagrichtung aufeinanderfolgend auf einer Bohrerachse eine Schlagfläche, einen Förderabschnitt und einen Bohrkopf. Der Förderabschnitt ist zum Fördern von Bohrgut in Schlagrichtung eingerichtet. Der Bohrer eignet sich zum Abbau von Armierungen. Das in das Bohrloch geförderte Bohrmehl bzw. das am aus dem Bohrloch fallen gehinderte Bohrmehl verbessert den Abbau von Stahlarmierungen. Der Bohrer kommt nur zum Abbau der Stahlarmierung zum Einsatz. Der Anwender wechselt den Bohrer sobald die Armierung durchtrennt und ein Abtransport des Bohrmehls wieder notwendig wird.

Der Förderabschnitt kann eine linksgängige Wendel, eine Sequenz aus Säulen und Stopfen oder eine linksgängige Wendel und die Sequenz. Die linksgängige Wendel transportiert das Bohrmehl bei dem üblichen Rechtslauf des Bohrers das Bohrmehl zum Bohrkopf. Die Säulen sind schmaler als der Bohrkopf und die Stopfen sind etwa so breit wie der Bohrkopf. Das Bohrmehl kann in dem die Säule umgebenden Hohlraum durch den Stopfen festgehalten werden. Die Schläge auf die Schlagfläche bewirken einen Rücktransport des Bohrmehls zu dem Bohrkopf.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrer
- Fig. 2: eine Draufsicht auf den Bohrer
- Fig. 3: den Bohrkopf des Bohrers
- Fig. 4: einen Bohrer
- Fig. 5: den Bohrer in einem Bohrloch
- Fig. 6: einen Bohrer

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

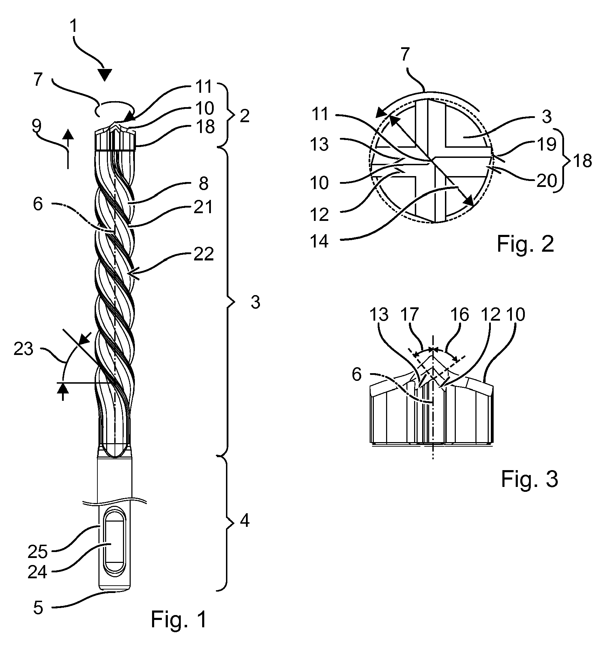

Fig. 1 zeigt einen beispielhaften Bohrer **1.** Der Bohrer **1** hat einen Bohrkopf **2,** einen Förderabschnitt **3** ein Einsteckende **4** und eine Schlagfläche **5.** Eine Bohrerachse **6** des Bohrers **1** verläuft durch den Bohrkopf **2** und die Schlagfläche **5.** Der Bohrer **1** ist beispielsweise für den Abbau von mineralischen Werkstoffen, z.B. armiertem Beton, ausgelegt. Der Bohrer **1** wird im Betrieb in einem Drehsinn **7** um seine Bohrerachse **6** gedreht. Der Bohrer **1** kann dazu in eine Handwerkzeugmaschine eingesetzt werden, welche einen entsprechenden Drehantrieb aufweist. Ein Schlagwerk der Handwerkzeugmaschine schlägt periodisch auf die Schlagfläche **5** an dem Einsteckende **4.** Die Stoßwelle der Schläge läuft durch die Wendel **8** in Schlagrichtung **9** zu dem Bohrkopf **2.** Der Bohrkopf **2** zertrümmert den Werkstoff. Die Drehbewegung stellt erstens sicher, dass der Bohrkopf **2** unter verschiedenen Orientierungen auf den Untergrund aufschlägt und das Bohrloch gleichmäßig ausgeschlagen wird.

Der beispielhafte Bohrkopf **2** hat vier Meißelkanten **10.** Die Meißelkanten **10** laufen an einer Spitze **11** auf der Bohrerachse **6** zusammen. Die Spitze **11** ist vorzugsweise der in Schlagrichtung **9** höchste Punkt, welche somit beim Bohren zuerst den Werkstoff kontaktiert.

Die Meißelkanten **10** können in radialer Richtung von außen zur Bohrerachse **6** hin längs der Schlagrichtung **9** ansteigen. Die Meißelkanten **10** weisen alle in die Schlagrichtung **9.** Die Meißelkanten **10** können alle gleich ausgestaltet sein, oder paarweise verschieden sein. Die Meißelkante **10** wird durch jeweils eine im Drehsinn **7** vorauslaufende Spanfläche **12** und im Drehsinn **7** nachlaufende Freifläche **13** gebildet. Die Meißelkanten **10** geben den Durchmesser **14** des Bohrers **1** und damit den Durchmesser eine mit dem Bohrer **1** gebohrten Bohrlochs **15** vor.

Der Drehsinn **7** verläuft entgegen der Schlagrichtung **9** auf den Bohrkopf **2** blickend im Gegenuhrzeigersinn, wie dies typisch für die gattungsgemäßen Bohrer **1** ist (Fig. 2). Die Spanfläche **12** und die Freifläche **13** sind zueinander geneigt, der Dachwinkel an der Meißelkante **10** ist größer als 45 Grad, vorzugsweise größer 60 Grad und geringer als 120 Grad. Die Spanfläche **12** ist vorzugsweise weniger gegenüber der Bohrerachse **6** geneigt, wie die Freifläche **13.** Ein Neigungswinkel **16** der Spanfläche **12** gegenüber der Bohrerachse 6 ist geringer als ein Neigungswinkel **17** der Freifläche **13** gegenüber der Bohrerachse **6.** Der Flächeninhalt der Spanfläche **12** ist geringer als der Flächeninhalt der Freifläche **13.** Hierdurch wird eine höhere Abbauleistung erreicht für den vorgegebenen Drehsinn **7** im Gegenuhrzeigersinn erreicht.

Der Bohrkopf **2** hat vier Abbruchkanten **18,** die parallel zu der Bohrerachse **6** verlaufen. Die Abbruchkanten **18** gehen in die Meißelkanten **10** über. Die Abbruchkanten **18** definieren den Durchmesser des Bohrkopfs **2.** Die Anzahl der Meißelkanten **10** und der Abbruchkanten **18** kann in Abhängigkeit des Durchmessers des Bohrers **1** gewählt sein. Beispielsweise kann bei einem Bohrer **1** geringen Durchmessers der Bohrkopf **2** zwei Meißelkanten **10,** ein Bohrkopf **2** großen Durchmessers mehr als vier Meißelkanten **10** und entsprechende Zahl von Abbruchkanten **18** aufweisen. Die Abbruchkanten **18** haben eine im Drehsinn **7** vorauslaufende Flanke **19** und eine im Drehsinn **7** nachfolgende Flanke **20.** Die Flanken **19, 20** sind beide im Wesentlichen parallel zu der Bohrerachse **6.** Während die vorauslaufende Flanke **19** vorzugsweise über ihre Abmessung im Drehsinn **7** einen zu der Bohrerachse **6** gleichbleibenden radialen Abstand zu der Bohrerachse **6** hat, verringert sich der radiale Abstand der nachlaufenden Flanke **20** im Drehsinn **7.**

Der Bohrkopf **2** ist vorzugsweise aus einem gesinterten Werkstoff, insbesondere Wolframkarbid, hergestellt. Die Meißelkanten **10** und die Abbruchkanten **18** sind vorzugsweise monolithisch zusammenhängend, insbesondere ohne Fügezone miteinander verbunden.

Der Förderabschnitt **3** des beispielhaften Bohrers **1** ist durch eine Wendel **8** gebildet. Die Wendel **8** ist linksläufig. Die Wendel **8** bewegt somit das Bohrgut in Schlagrichtung **9,** wenn der Bohrkopf **2** in dem für ihn vorgesehenen Drehsinn **7,** d.h. im Gegenuhrzeigersinn, gedreht wird. Im Gegensatz zu einem herkömmlichen Bohrer **1** wird das Bohrgut nicht aus einem Bohrloch entfernt sondern beim Bohren in das Bohrloch hineingefördert.

Die Wendel **8** des Bohrers **1** hat beispielsweise vier Wendelstege **21.** Die Anzahl der Wendelstege **21** ist vorzugsweise gleich der Anzahl der Meißelkanten **10.** Die Wendelstege **21** laufen längs der Bohrerachse **6** mehrfach um diese Bohrerachse 6 um. Die Wendelstege **21** beschreiben beim Drehen des Bohrers **1** eine zylindrische Einhüllende, deren Durchmesser einem Wendeldurchmesser entspricht. Jeweils benachbarte Wendelstege **21** schließen zwischen sich eine Wendelnut **22** ein, die in radialer Richtung durch die Einhüllende als geometrisch begrenzt angesehen wird. Das Bohrgut wird in den Wendelnuten **22** durch die Wendelstegen **21** längs der Bohrerachse **6** transportiert. Eine Wendelsteigung **23** liegt vorzugsweise im Bereich zwischen 35 Grad und 60 Grad, z.B. 45 Grad.

Das beispielhafte Einsteckende **4** des Bohrers **1** ist für die Verwendung von drehmeißelnden Handwerkzeugmaschinen ausgelegt. Das Einsteckende **4** hat eine im Wesentlichen zylindrische Form. Das Einsteckende **4** hat zwei geschlossene Nuten **24,** in welchen Verriegelungselemente der Handwerkzeugmaschine radial eingreifen und längs der Bohrerachse **6** gleiten können. Zur Bohrerachse **6** längs ausgerichtete Rillen **25** ermöglichen ein Einleiten eines Drehmoments von der Handwerkzeugmaschine.

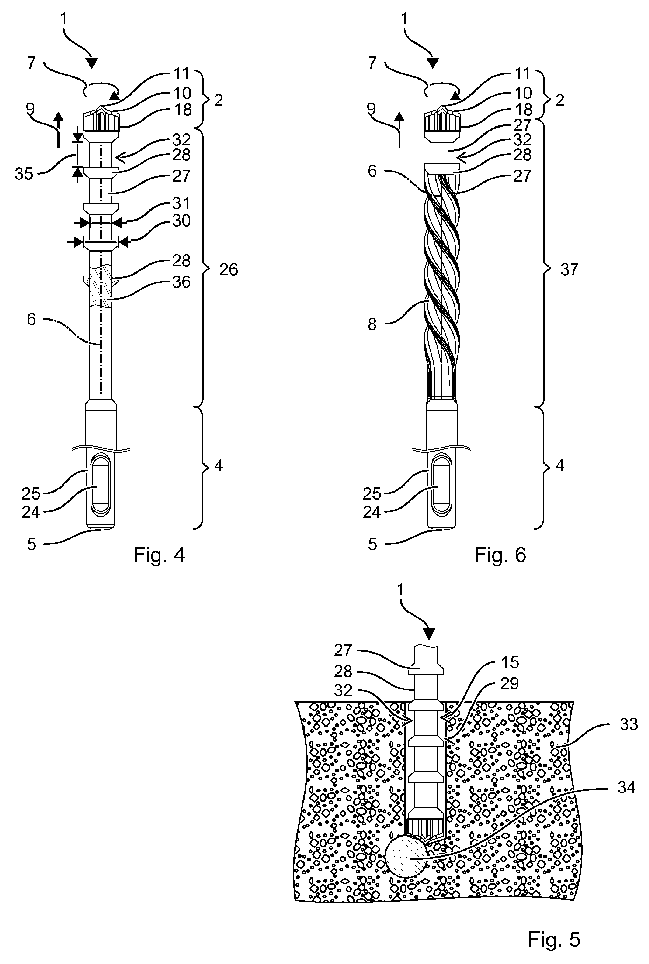

Fig. 4 zeigt einen beispielhaften Bohrer **1** mit der Schlagfläche **5,** dem Einsteckende **4,** einem Förderabschnitt **26** und einem Bohrkopf **2.** Die Schlagfläche **5,** das Einsteckende **4** und der Bohrkopf **2** können wie bei dem Bohrer **1** in Fig. 1 ausgestaltet sein; für eine Beschreibung wird auf die vorhergehenden Absätze verwiesen.

Der beispielhafte Förderabschnitt **26** aufeinanderfolgend mehrere Säulen **27** und Stopfen **28.** Die Stopfen **28** sind rotationssymmetrisch. Die Stopfen **28** legen sich an die Bohrlochwand **29** an. Ein Durchmesser **30** der Stopfen **28** ist etwa gleich oder geringfügig geringer als der Durchmesser **14** des Bohrkopfs **2.** Beispielsweise liegt der Durchmesser **30** des Stopfens **28** im Bereich von 90 % bis 100 % des Durchmesser **14** des Bohrkopfs **2.** Die Säulen **27** sind vorzugsweise zylindrisch. Ein Durchmesser **31** der Säulen **27** ist deutlich geringer als der Durchmesser **30** der Stopfen **28.** Zwischen der Bohrlochwand **29** und der Säule **27** bildet sich ein Hohlraum **32** aus, welcher Bohrgut aufnehmen kann. Der Hohlraum **32** ist entgegen der Schlagrichtung **9** durch den Stopfen **28** abgeschlossen. Fig. 5 zeigt den Bohrer **1** in einem Bohrloch **15** in einer Wand **33** mit einer Armierung **34.** Die Säule **27** hat beispielsweise eine Durchmesser **31** im Bereich zwischen 50 % und 75 % des Durchmessers **30** der Stopfen **28.**

Die Stopfen **28** können an ihrer dem Einsteckende **4** zugewandten Seite kegelstumpfförmig sein. Die Stopfen **28** verjüngen sich somit entgegen der Schlagrichtung **9.** Die dem Bohrkopf **2** zugewandte Seite ist vorzugsweise eben.

Die dem Bohrkopf **2** nächste Säule **27** hat vorzugsweise eine Höhe **35** zwischen dem halben bis zweifachen Durchmessers **14** des Bohrkopfs **2.** Diese oberste Säule **27** ist entgegen der Schlagrichtung **9** durch einen Stopfen **28** abgeschlossen; in Schlagrichtung **9** ist die oberste Säule **27** durch einen unmittelbar an den Bohrkopf **2** angrenzenden Stopfen **28** abgeschlossen oder, vorzugsweise, die oberste Säule **27** grenzt unmittelbar an den Bohrkopf **2** an. Das meiste Bohrgut bleibt in der obersten Säule **27** und wird bei jedem Schlag auf die Schlagfläche **5** zum Teil wieder zu dem Bohrkopf **2** geschleudert.

Die die Säulen **27** und die Stopfen **28** können aus demselben Material, vorzugsweise Stahl sein. Alternativ sind die Säulen **27** durch eine über die gesamte Länge des Förderbereichs durchgehende Stange **36** aus Stahl gebildet. Die Stopfen **28** sind aus einem Kunststoff, insbesondere aus einem elastischen Kunststoff, welche auf die Stange **36** aufgesetzt sind.

Die Anzahl der Stopfen **28** und der Säulen **27** ist von der Länge des Bohrers **1** abhängig. Die Stopfen **28** bewirken neben dem Abschließen der Hohlräume **32** auch eine Führung des Bohrers **1** in dem Bohrloch.

Eine weitere Ausgestaltung kombiniert für einen Förderbereich **37** die linksläufige Wendel **8** und die Säule **27** mit einem Stopfen **28.** Fig. 6 zeigt den beispielhaften Bohrer **1** mit einer an den Bohrkopf **2** angrenzenden Säule **27,** welche entgegen der Schlagrichtung **9** durch den Stopfen **28** abgeschlossen ist. An den Stopfen **28** schließt sich die linksläufige Wendel **8** an.

## Patentansprüche

1. Bohrer (1), der in einer Schlagrichtung (9) aufeinanderfolgend auf einer Bohrerachse (6) eine Schlagfläche (5), einen Förderabschnitt (3) und einen Bohrkopf (2) aufweist, **dadurch gekennzeichnet, dass** der Förderabschnitt (3; 26) zum Fördern von Bohrgut in Schlagrichtung (9) eingerichtet ist.

2. Bohrer (1) nach Anspruch 1, **dadurch gekennzeichnet, dass** der Förderabschnitt (3) eine linksgängige Wendel (8) aufweist.

3. Bohrer (1) nach Anspruch 2, **dadurch gekennzeichnet, dass** der Bohrkopf (2) rechtsgängig ist.

4. Bohrer (1) nach Anspruch 2 oder 3, wobei der Bohrkopf (2) wenigstens eine durch eine Spanfläche (12) und eine Freifläche (13) gebildete Meißelkante (10) aufweist, wobei ein Neigungswinkel (16) der Spanfläche (12) gegenüber der Bohrerachse (6) geringer als ein Neigungswinkel (17) der Freifläche (13) gegenüber der Bohrerachse (6) ist, **dadurch gekennzeichnet, dass** die Spanfläche (12) entgegen der Schlagrichtung (9) auf den Bohrkopf (2) blickend entgegen den Uhrzeigersinn weist.

5. Bohrer (1) nach Anspruch 1, **dadurch gekennzeichnet, dass** der Förderabschnitt (3) in Schlagrichtung (9) ein oder mehrere aufeinanderfolgende Sequenzen aus rotationssymmetrischen Stopfen (28) und Säulen (27) und aufweist, wobei ein Durchmesser (14) des Bohrkopfs (2) größer als ein Durchmesser (30) des Stopfens (28) ist und ein Durchmesser (30) des Stopfens (28) größer als ein Durchmesser (31) der Säulen (27) ist.

6. Bohrer (1) nach Bohrer (1) nach Anspruch 5, **dadurch gekennzeichnet, dass** der Stopfen (28) entgegen der Schlagrichtung (9) verjüngt ist.

7. Bohrer (1) nach Bohrer (1) nach Anspruch 5 oder 6, **dadurch gekennzeichnet, dass** ein Durchmesser (31) der Säule (27) zwischen 50 % und 75 % des Stopfens (28) beträgt.

8. Bohrer (1) nach Bohrer (1) nach einem der Ansprüche 5 bis 7, **dadurch gekennzeichnet, dass** ein Durchmesser (31) der Säule (27) zwischen 50 % und 75 % des Stopfens (28) beträgt.

9. Bohrer (1) nach Bohrer (1) nach einem der Ansprüche 5 bis 8, **dadurch gekennzeichnet, dass** eine dem Bohrkopf (2) am nächsten angeordnete Säule (27) eine Höhe (35) von weniger als dem Doppelten des Durchmessers (14) des Bohrkopfs (2) aufweist.

10. Bohrer (1) nach Bohrer (1) nach einem der Ansprüche 5 bis 8, **dadurch gekennzeichnet, dass** der Förderbereich (37) eine linksläufige Wendel (8) aufweist, an welche sich in Schlagrichtung (9) die Sequenz aus Säulen (27) und Stopfen (28) anschließt.
